# EUROPEAN PATENT SPECIFICATION

(11) **EP 2 976 948 B1**
(45) Date of publication and mention of the grant of the patent: **15.05.2019**
(21) Application number: 14177788.8
(22) Date of filing: 21.07.2014
(51) Int. Cl.: A23G 1/18, A23G 3/02

(54) **Module for thermal conditioning and tempering machine employing such a module**
Modul für thermische Aufbereitung und Temperiermaschine unter Verwendung eines solchen Moduls
Module pour conditionnement thermique et machine de conditionnement thermique utilisant un tel module

(43) Date of publication of application: 27.01.2016
(73) Proprietor: Bonato, Francesco, 20125 Milano (IT)
(72) Inventor: Bonato, Francesco, 20125 Milano (IT)
(74) Representative: Frontoni, Stefano

(56) References cited:
- EP-A1- 0 123 653
- GB-A- 556 237
- GB-A- 2 334 196
- US-A- 3 483 920
- US-A- 3 777 807
- US-A- 4 724 754

## Description

### Field of the invention

The present invention relates to a particular module for thermal conditioning of foodstuff material of a flowable type (i.e., a material that tends to flow), and a tempering machine for tempering chocolate that employs the module.

### Relevant prior art

Tempering machines so far known and most widely used in the art are provided with thermal-conditioning modules that comprise vessels or tubings cooled on their outer walls, arranged inside which are stirring or scraping elements that operate so as to mix the chocolate and/or remove it from the cooled walls so as to obtain a homogeneous thermal state.

In general, tempering machines necessarily have to comprise a plurality of conditioning modules in order to be able to reduce rapidly and in a precise way the temperature of the chocolate.

In this regard, it is here pointed out that the mobile elements, and their actuation members, with which the conditioning modules of traditional tempering machines are provided considerably constrain the modes with which the various modules can be arranged with respect to one another within the machines, and in fact usually they are aligned so as to present a single axis of rotation about which the scraping or stirring elements of the various modules turn.

In addition, the presence of the mobile elements and their actuation members prevents traditional tempering machines from being used for treatment of chocolate containing chocolate grain or other granular material, in so far as, in the long run, this solid material would risk damaging the mobile parts of the conditioning modules. Finally, it is again to be noted that the presence of the mobile elements complicates considerably the procedures of washing of the conditioning modules.

In order to overcome the above drawbacks, thermal-conditioning modules without mobile members have already been proposed in the art, which, however, have proven unable to guarantee a tempering quality similar to the one that can be achieved using traditional modules.

A module according to the preamble of Claim 1 is disclosed in GB556,237.

### Object of the invention

In the above context, the object of the present invention is to provide a thermal-conditioning module that will overcome the drawbacks discussed above and that at the same time will be able to guarantee a tempering quality comparable to the one that can be achieved with the traditional machines described above.

The above object is achieved via a module having the characteristics of Claim 1. The present invention moreover regards a tempering machine according to Claim 7.

The claims form an integral part of the technical teaching provided herein in relation to the invention.

### Brief description of the drawings

Further characteristics and advantages of the invention will emerge clearly from the ensuing description with reference to the annexed drawings, which are provided purely by way of non-limiting example and in which:
- Figure 1 is a perspective view of an embodiment of the thermal-conditioning module described herein;
- Figure 2 is a cross-sectional view of the

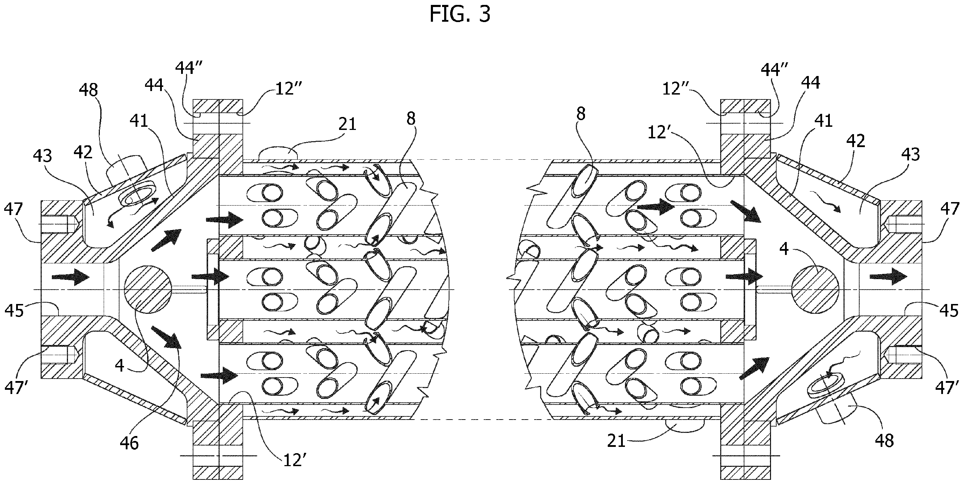

- Figure 3 illustrates an enlarged detail of a portion of the view of Figure 2;
- Figure 4 is a cross-sectional view of the module of Figure 1 according to the plane IV-IV illustrated in Figure 1;
- Figure 4A is a schematic cross-sectional view according to a transverse plane of an example of tubing provided inside the module described herein;
- Figure 4B is a schematic cross-sectional view according to a longitudinal plane of an example of tubing provided inside the module described herein; and
- Figure 5 is a schematic illustration of different constructional configurations for a tempering machine that uses the conditioning module described herein.

### Detailed description of some embodiments of the invention

In the ensuing description, various specific details are illustrated aimed at providing an in-depth understanding of the embodiments. The embodiments may be provided without one or more of the specific details, or with other methods, components, or materials, etc. In other cases, known structures, materials, or operations are not shown or described in detail so that various aspects of the embodiment will not be obscured.

The references used herein are only provided for convenience and hence do not define the sphere of protection or the scope of the embodiments.

With reference to the figures, the thermal-conditioning module described herein, designated by the reference number 100, comprises an outer casing 2, which is cylindrical, coupled to each of the opposite ends of which are a manifold 4 and a manifold 5.

Provided within the casing 2 are a plurality of tubings 6, which are cylindrical, which extend parallel to one another and to the casing 2 and which are set at a given distance from one another as likewise from the walls of the casing. Between the inner wall of the casing 2 and the outer walls of the tubings 6 a chamber 10 is thus obtained. The opposite ends of the casing 2 are each engaged by a respective perforated plate 12, the holes 12' of which are engaged by the corresponding ends of the tubings 6 so as to be supported.

The tubings 6 are designed to be traversed by the material to be conditioned, whereas the chamber 10 is designed to be traversed by the conditioning means; the latter may be either liquid or gaseous, or else be constituted by at least one respective component for each of these two states.

The manifolds 4 and 5 have an inner bell-shaped wall 41 and an outer wall 42 that surrounds the wall 41 so as to form a first chamber 43. The base side of the manifolds is delimited by a perforated plate 44, which is designed to be fixed to the plate 12 and which is also perforated so as to set the inside of the tubings 6 in communication with the chambers 43 of the two manifolds 4 and 5. Defined between the inner wall 41 and the plate 44 is a second chamber 46.

The plates 12 and 44 have respective mutual-coupling means 12", 44" (for example, fixing holes, as illustrated in the figure) for fixing the manifolds 4 and 5 to the casing 2.

As a result of what has been said above, the inside of the tubings 6 is set in fluid communication with the second chamber 46.

The manifolds 4 and 5 then have a mouth 45, preferably in a substantially central position, aligned with the longitudinal axis of the module 100, which sets the second chamber 46 in communication with the outside world. The end side of the manifolds is defined by a plate-like portion 47, in which the mouth 45 is obtained and which has purposely provided means 47' (for example, threaded holes) for fixing the entire module 100 to the structure of the machine in which it is to be incorporated.

The chamber 10 is, instead, designed to be set in communication with the first chamber 46. This communication may, for example, be provided via further holes made in the plates 12 and 44 themselves or else from outside, through respective ducts (not illustrated) and connectors (see the connector 21 illustrated in the figure). Moreover, the manifolds 4 and 5 have at least one connector 48 via which the conditioning means is supplied into or made to exit from the chamber 46.

According to an important characteristic of the module described herein, each tubing 6 is provided with at least one series of through pipes 8, preferably cylindrical, which traverse it in a direction transverse to its longitudinal direction and which have both of their opposite ends in communication with the chamber 10. The inside of the pipes 8 is, instead, completely isolated from the inside of the tubings 6.

In embodiments according to the invention, as in the one illustrated, the pipes 8 project with their opposite ends from the outer wall of the tubings 6 by a very small stretch, considerably smaller than the total length of the pipes.

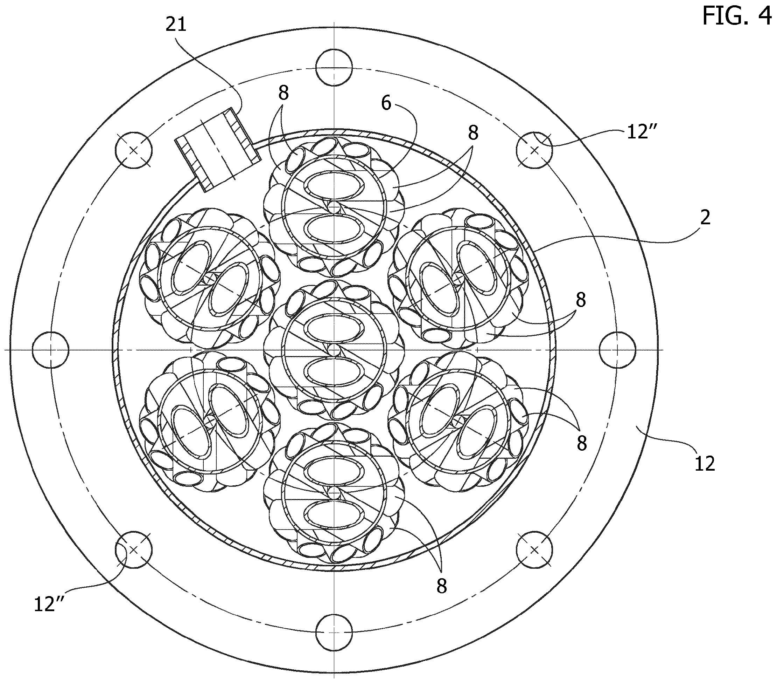

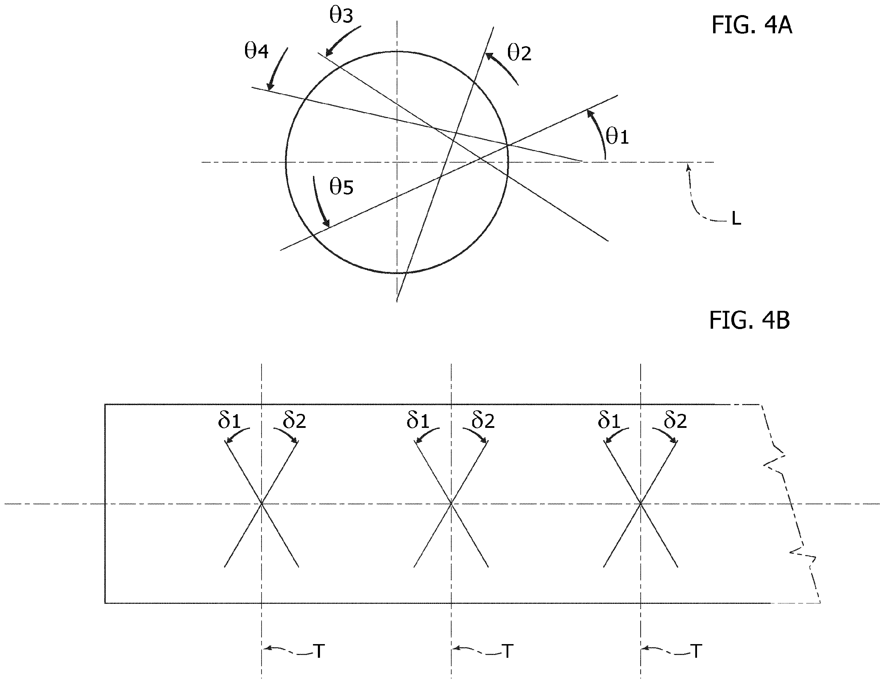

In various embodiments, as in the one illustrated, the pipes 8 are arranged in succession in the longitudinal direction of the tubing 6 according to an orientation variable with respect to a plane of longitudinal section of the tubing, preferably in a continuous way, in a clockwise or counterclockwise direction, from each pipe of the series to the next one. In this connection, Figure 4A illustrates an example of how the orientation with respect to the longitudinal plane L can vary within the series; in particular, the angles Θ1, Θ2, Θ3, Θ4, Θ5 indicated in the figure are the various angles of inclination with respect to the plane L, respectively of a series of five pipes, starting from a first pipe with angle of inclination Θ1 up to a fifth pipe with angle of inclination Θ5.

In embodiments according to the invention, as in the one illustrated, the tubings 6 each have two series of pipes 8 that are arranged in substantially corresponding positions along the tubing 6. In particular, the pipes in corresponding positions of the two series are oriented with respect to a plane of cross section of the tubing 6 according to angles of opposite sign; see in this connection Figure 4B, which illustrates, according to a cross-sectional view from above, how the pipes of the two series that are arranged in corresponding positions are in fact oriented with respect to the corresponding transverse plane T according to the two opposite angles δ1 and δ2. Moreover, in various embodiments, as in the one illustrated, the pipes of each series are arranged in succession according to an orientation that varies in a continuous way, in a clockwise or counterclockwise direction, from each pipe to the next of one and the same series, and moreover the above variable orientation of the pipes may be in phase between the two series (as in the embodiment illustrated) or else out of phase by a given angular value. In embodiments according to the invention, the pipes 8 of each series traverse the tubing 6 along secant lines that pass alongside the central axis of the tubing (see, for example, Figure 4A).

With a view to the foregoing, it should be noted that the pipes 8 have the function of constituting a capillary network for transport of the conditioning means, completely integrated on the tubing 6, which is able to reach any portion of the flow of material to be conditioned that traverses the tubing. Moreover, the above network of pipes exerts also the effect of creating turbulence in the flow of the material to be conditioned, further favouring heat exchange between the material and the conditioning means.

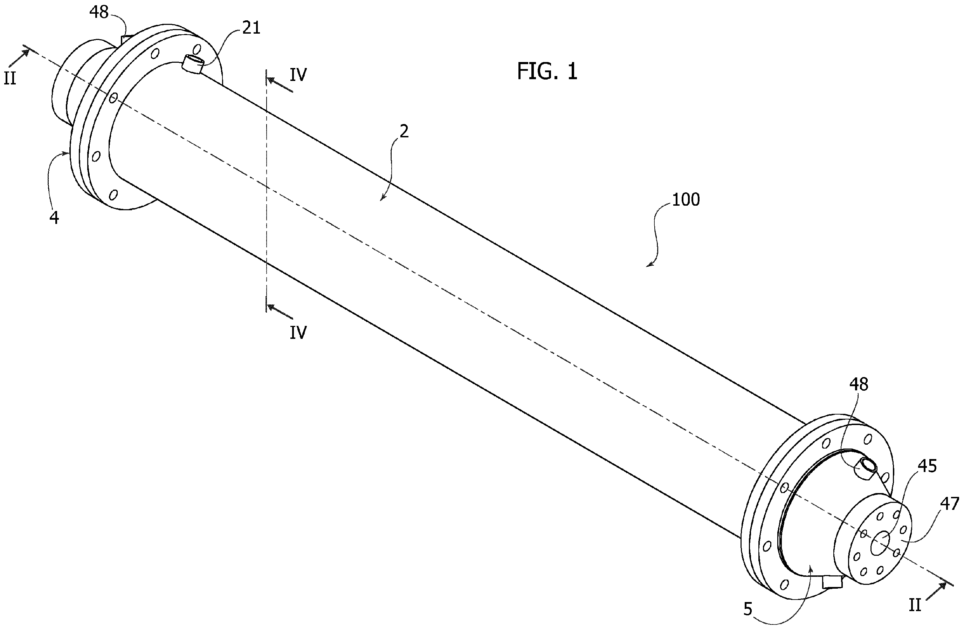

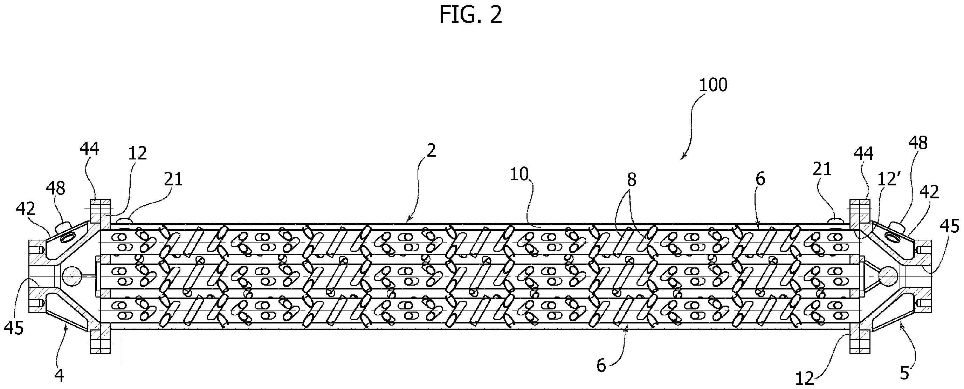

With reference now to Figures 1 and 2, operation of the module 100 then envisages that the material to be conditioned - for example, chocolate in the case of use in a tempering machine - will enter the manifold 4 (or the manifold 5) through the inlet mouth 45, from the chamber 46 of the manifold go inside the tubings 6, will traverse them, will be collected in the chamber 46 of the manifold 5, and finally will come out through the outlet mouth 45 thereof. Simultaneously, the conditioning means - i.e., cooling water in the example mentioned - enters the manifold 4 (or the manifold 5) through the connector 48, gathers in the chamber 43, enters the casing 2 and traverses the capillary network constituted by the pipes 8, gathers in the chamber 43 of the manifold 5, and finally comes out through the outlet connector 48. It should be noted that the directions of traversal of the module 100 by the conditioning means and by the material to be conditioned may be concordant or discordant according to the type of application.

In regard to the technical problem mentioned at the start concerning tempering machines of a traditional type, it is pointed out that the module described herein is able to guarantee a high heat exchange in the absence of mobile parts, and is consequently able to constitute a valid alternative to heat-exchange modules used in traditional machines, moreover enabling the drawbacks discussed above to be overcome.

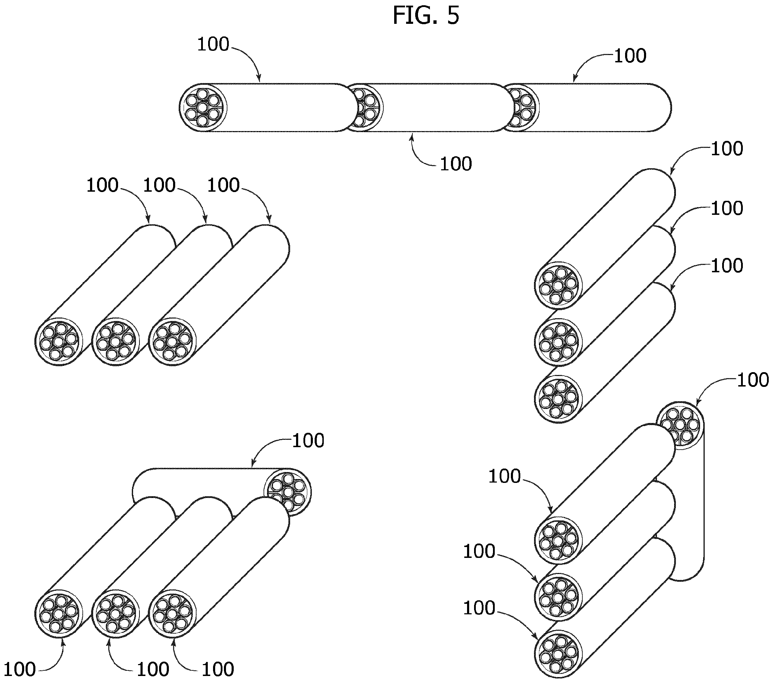

Figure 5 represents, in this connection, various examples of constructional schemes for a tempering machine that employs the conditioning module described herein. It may immediately be noted how the absence of moving parts within the above modules enables positioning of the latter in a wide range of ways according to the specific requirements of application, which may regard, for example, the type of operation required or else also the space available. The same modules of one and the same machine may then differ from one another as regards various characteristics, such as the length/diameter of the module 100, the number/diameter of the tubings 6, the number/diameter of the pipes 8, etc., always according to the specific requirements of application. Finally, it should be noted that, even though the conditioning module described herein has been devised with specific reference to a use in tempering machines, the same module can in any case also be used in other applications of the foodstuff sector, such as, for example, cooking of sugary syrups, hence using in this case, instead of a cooling means - such as cooling water, in tempering machines -, a heating means, for example steam.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A module (100) for thermal conditioning of foodstuff material of a flowable type, of the type comprising:
- a cylindrical outer casing (2);
- a plurality of cylindrical tubings (6) arranged parallel within said casing;
- a first inlet and a first outlet for a flow of a conditioning means within a chamber (10) defined between the inner wall of said casing (2) and the outer walls of said tubings (6); and
- a first inlet and a first outlet (45) for a flow of said flowable foodstuff material within said tubings;
each tubing (6) being provided with at least one series of through pipes (8) that traverse it in a direction transverse to its longitudinal direction and that have both their opposite ends in communication with said chamber (10),
said module being **characterized in that**:
said pipes (8) project with their opposite ends from the outer wall of the tubings (6) by a stretch that is considerably smaller than the total length of said pipes (8),
each tubing of said plurality is provided with two series of through pipes and the pipes (8) of said two series are set in substantially corresponding positions along said tubing,
the pipes (8) in corresponding positions of said two series are oriented with respect to a plane of cross section (T) of said tubing according to angles of opposite sign (δ1, δ2), and
the pipes (8) of each series traverse said tubing along secant lines that pass alongside the central axis of said tubing.

2. The module according to Claim 1, wherein said series of pipes (8) is distributed in the longitudinal direction of said tubing (6).

3. The module according to Claim 2, wherein the pipes (8) of said series are arranged in succession in said longitudinal direction according to an orientation variable with respect to a plane of longitudinal section (L) of said tubing (6).

4. The module according to Claim 3, wherein the pipes (8) of said series are arranged in succession according to an orientation variable in a continuous way, in a clockwise or counterclockwise direction, from each pipe of said series to the next.

5. The module according to Claim 1, wherein the pipes (8) of each series are arranged in succession according to an orientation variable in a continuous way, in a clockwise or counterclockwise direction, from one pipe to the next of one and the same series.

6. The module according to Claim 5, wherein said variable orientation of the pipes is in phase between one series and the other or else is out of phase by a given angular value.

7. A tempering machine comprising a plurality of modules according to any one of the preceding claims, which are operatively connected together.

## Patentansprüche

1. Modul (100) zum thermischen Konditionieren von fließfähigem Lebensmittelmaterial, umfassend:
- einen zylindrischen Außenmantel (2),
- eine Vielzahl innerhalb des Mantels parallel angeordneter zylindrischer Rohre (6),
- einen ersten Einlass und einen ersten Auslass für einen Strom eines Konditioniermittels innerhalb einer zwischen der Innenwand des Mantels (2) und den Außenwänden der Rohre (6) definierten Kammer (10) und
- einen ersten Einlass und einen ersten Auslass (45) für einen Strom des fließfähigen Lebensmittelmaterials innerhalb der Rohre,
wobei jedes Rohr (6) mit mindestens einer Serie von Durchgangsleitungen (8) versehen ist, die dieses in einer quer zu dessen Längsrichtung verlaufenden Richtung durchqueren und die mit ihren beiden entgegengesetzten Enden mit der Kammer (10) in Verbindung stehen,
wobei das Modul **dadurch gekennzeichnet ist, dass**:
die Leitungen (8) mit ihren entgegengesetzten Enden aus der Außenwand der Rohre (6) um eine Strecke herausragen, die wesentlich kleiner ist als die Gesamtlänge der Leitungen (8),
jedes Rohr der Vielzahl mit zwei Serien von Durchgangsleitungen versehen ist und die Leitungen (8) der zwei Serien in im Wesentlichen korrespondierenden Positionen entlang des Rohrs platziert sind,
die in korrespondierenden Positionen befindlichen Leitungen (8) der zwei Serien in Bezug auf eine Querschnittsebene (T) des Rohrs in Winkeln mit umgekehrtem Vorzeichen (δ1, δ2) ausgerichtet sind und
die Leitungen (8) jeder Serie das Rohr entlang Sekanten durchqueren, die neben der Mittelachse des Rohrs vorbeilaufen.

2. Modul nach Anspruch 1, wobei die Serie von Leitungen (8) in Längsrichtung des Rohrs (6) verteilt ist.

3. Modul nach Anspruch 2, wobei die Leitungen (8) der Serie in einer Ausrichtung, die in Bezug auf eine Längsquerschnittsebene (L) des Rohrs (6) variiert, in der Längsrichtung aufeinanderfolgend angeordnet sind.

4. Modul nach Anspruch 3, wobei die Leitungen (8) der Serie in einer Ausrichtung, die im oder gegen den Uhrzeigersinn von jeder Leitung der Serie zur nächsten kontinuierlich variiert, aufeinanderfolgend angeordnet sind.

5. Modul nach Anspruch 1, wobei die Leitungen (8) jeder Serie in einer Ausrichtung, die im oder gegen den Uhrzeigersinn von einer Leitung zur nächsten aus ein und derselben Serie kontinuierlich variiert, aufeinanderfolgend angeordnet sind.

6. Modul nach Anspruch 5, wobei die variable Ausrichtung der Leitungen zwischen einer Serie und der anderen phasengleich ist oder um einen bestimmten Winkelwert phasenverschoben ist.

7. Temperiermaschine, die eine Vielzahl von Modulen nach einem der vorhergehenden Ansprüche umfasst, die miteinander wirkverbunden sind.

## Revendications

1. Module (100) pour le conditionnement thermique d'une matière alimentaire d'un type fluide, du type comprenant :
- un boîtier (2) extérieur cylindrique ;
- une pluralité de tubes (6) cylindriques agencés parallèlement à l'intérieur dudit boîtier ;
- une première entrée et une première sortie pour un écoulement d'un moyen de conditionnement à l'intérieur d'une chambre (10) définie entre la paroi intérieure dudit boîtier (2) et les parois extérieures desdits tubes (6) ; et
- une première entrée et une première sortie (45) pour un écoulement de ladite matière alimentaire fluide à l'intérieur desdits tubes ;
chaque tube (6) étant pourvu d'au moins une série de tuyaux traversants (8) qui le traversent dans une direction transversale à sa direction longitudinale et qui ont leurs deux extrémités opposées en communication avec ladite chambre (10).
ledit module étant **caractérisé en ce que** :
lesdits tuyaux (8) font saillie avec leurs extrémités opposées à partir de la paroi extérieure des tubes (6) sur un tronçon considérablement plus petit que la longueur totale desdits tuyaux (8),
chaque tube de ladite pluralité est pourvu de deux séries de tuyaux traversants et les tuyaux (8) desdites deux séries sont placés dans des positions substantiellement correspondantes le long dudit tube,
les tuyaux (8) dans les positions correspondantes desdites deux séries sont orientés par rapport à un plan de section transversale (T) dudit tube selon des angles de signes opposés (δ1, δ2), et
les tuyaux (8) de chaque série traversent ledit tube le long de lignes sécantes qui passent le long de l'axe central dudit tube.

2. Module selon la revendication 1, dans lequel ladite série de tuyaux (8) est répartie dans la direction longitudinale dudit tube (6).

3. Module selon la revendication 2, dans lequel les tuyaux (8) de ladite série sont agencés successivement dans ladite direction longitudinale selon une orientation variable par rapport à un plan de section longitudinale (L) dudit tube (6).

4. Module selon la revendication 3, dans lequel les tuyaux (8) de ladite série sont agencés successivement selon une orientation variable de manière continue, dans le sens des aiguilles d'une montre ou dans le sens inverse des aiguilles d'une montre, de chaque tuyau de ladite série à l'autre.

5. Module selon la revendication 1, dans lequel les tuyaux (8) de chaque série sont agencés successivement selon une orientation variable de manière continue, dans le sens des aiguilles d'une montre ou dans le sens inverse des aiguilles d'une montre, d'un tuyau à l'autre d'une seule et même série.

6. Module selon la revendication 5, dans lequel ladite orientation variable des tuyaux est en phase entre une série et l'autre ou bien est déphasée d'une valeur angulaire donnée.

7. Tempéreuse comprenant une pluralité de modules selon l'une quelconque des revendications précédentes, qui sont reliés ensemble de manière fonctionnelle.
